# EUROPÄISCHE PATENTSCHRIFT

(11) **EP 0 798 172 B1**
(45) Veröffentlichungstag und Bekanntmachung des Hinweises auf die Patenterteilung: **24.11.1999**
(21) Anmeldenummer: 97101097.0
(22) Anmeldetag: 24.01.1997
(51) Int. Cl.: B60R 21/22

(54) **Aufblasbares Kopfschutzsystem, insbesondere für den Seitenbereich eines Kraftfahrzeuges**
An inflatable head restraint, for vehicle side impact in particular
Système gonflable protégeant la tête, pour le côté d'un véhicule en particulier

(30) Priorität: 23.03.1996 DE 19611575
(43) Veröffentlichungstag der Anmeldung: 01.10.1997
(73) Patentinhaber: Bayerische Motoren Werke Aktiengesellschaft, 80788 München (DE)
(72) Erfinder: Stavermann, Jörg, 80331 München (DE)

(56) Entgegenhaltungen:
- DE-A- 4 307 175
- DE-U- 29 610 920
- GB-A- 2 278 812
- GB-A- 2 297 950

## Beschreibung

Die Erfindung betrifft ein aufblasbares Kopfschutzsystem insbesondere für den Seitenbereich eines Kraftfahrzeuges, mit einem an der Fahrzeug-Karosse an zumindest zwei Befestigungspunkten angebundenen, im nicht aufgeblasenen Zustand verdeckt angeordneten Luftsack.

Stand der Technik sind Kopfschutzsysteme für Kraftfahrzeuge, insbesondere Personenkraftwagen, die entweder mit einem Thorax-Airbag- oder Luftsack-Modul verbunden sind und die sich aus der Fahrzeug-Türe oder dem Fahrzeug-Sitz entfalten, und bei denen die Luftsackgröße so ausgelegt ist, daß sowohl der Thorax-Bereich, als auch der Kopf geschützt werden kann, oder separate Kopfschutzsysteme, die bevorzugt im Dachbereich des Fahrzeuges angeordnet sind. Aus der DE 43 04 152 A1 ist es auch bereits bekannt, einen Thorax-Airbag sowie einen Kopfschutz-Airbag oder Kopfschutz-Luftsack zu kombinieren, wobei sich gleichzeitig diese beiden Luftsäcke aufeinander abstützen, um im aufgeblasenen Zustand gleichsam eine stabile Seitenwand zu bilden. Diese bekannte Anordnung ist zwar grundsätzlich überzeugend, jedoch besteht hierbei der Nachteil, daß zwei separate Luftsack-Systeme vorgesehen sein müssen.

Wünschenswert wäre es demgegenüber, mit einem einzigen Luftsack auszukommen, so wie dies beispielsweise in der WO 94/19215 mit einem im wesentlichen schlauchförmigen Luftsack gezeigt ist. Dieser schlauchförmige Luftsack kann an der A- und C-Säule des Fahrzeuges befestigt sein und im nicht aufgeblasenen Zustand dem Verlauf des Dachholmes folgend verdeckt angeordnet sein; während des Aufblasvorganges wird dieser Luftsack dann durch Kontraktion in die Schutzposition gebracht. Dieses an sich überzeugende aufblasbare Kopfschutzsystem ist jedoch im wesentlichen nur für schlauchförmige Luftsäcke anwendbar, nicht jedoch für einen größerflächigen, beispielsweise rechteckigen Luftsack, da hierfür die nötigen Abstützpunkte fehlen. Ein separates, beispielsweise am Fahrzeugdach angeordnetes kissenartiges Kopfschutzsystem ist ebenso wie ein Thorax-Airbag-Modul nämlich nicht in der Lage, die durch den Kopf beim Aufprall einwirkenden Querkräfte aufzunehmen bzw. eine entsprechende Gegenposition zu bilden. Ein starkes Pendeln des Kopfes während einer Seitenkollision des Fahrzeuges ist somit die Folge. Das schlauchförmige Luftsack-System nach der WO 94/19215 ist zwar in der Lage, derartige Querkräfte aufzunehmen, jedoch funktioniert dies nur mit einem derartigen schlauchförmigen Gebilde mit rundem Querschnitt, was einen relativ komplizierten Herstellprozeß erfordert.

Eine Abhilfemaßnahme für die geschilderte Problematik aufzuzeigen, ist daher Aufgabe der vorliegenden Erfindung.
Zur Lösung dieser Aufgabe ist vorgesehen, daß am Luftsack abseits der Befestigungspunkte zumindest zwei Spannbänder vorgesehen sind, die derart an der Karosse befestigt sind, daß der Luftsack im aufgeblasenen Zustand im wesentlichen vollflächig verspannt ist. Vorteilhafte Aus- und Weiterbildungen sind Inhalt der Unteransprüche.

Erfindungsgemäß ist der Luftsack nicht nur an zumindest zwei Befestigungspunkten an der Fahrzeug-Karosse angebunden, sondern darüber hinaus sind noch Spannbänder vorgesehen, die den Luftsack im aufgeblasenen Zustand verspannen bzw. derart fixieren, daß dieser Luftsack dann die oben geschilderten Querkräfte aufnehmen kann. Hierdurch ist es möglich, den Luftsack als größerflächiges Kissen, beispielsweise in der Form eines Rechteckes, auszubilden. Dieses rechteckige Kissen kann dann mit einer seiner Längsseiten an der Karosse befestigt sein und an der gegenüberliegenden Längsseite bevorzugt jeweils im Eckbereich die Spannbänder tragen, die ihrerseits wiederum an der Karosse befestigt sind. Man erhält somit ein vollflächig fixiertes Kissen mit vier Ecken, die jeweils räumlich festgelegt sind, so daß eine optimale Querkraftaufnahme möglich ist. In diesem Zusammenhang sei darauf hingewiesen, daß selbstverständlich anstelle der zwei Spannbänder auch ein einziges durchgehendes Spannband vorgesehen sein kann, welches somit entlang einer Längsseite des Luftsackes verlaufend sich über die beiden Ecken dieser Längsseite hinaus fortsetzend mit seinen beiden Enden jeweils an der Karosse befestigt ist.

Analog der bereits mehrfach genannten WO 94/19215 kann der Luftsack im nicht aufgeblasenen Zustand im Bereich des Fahrzeug-Dachholmes angeordnet sein, während die Spannbänder mit ihren dem Luftsack abgewandten Enden an der A-Säule und der C-Säule der PKW-Karosse befestigt sein können. Dabei kann dieses System im nicht aufgeblasenen Zustand vollständig von den fahrzeug-innenraum-seitigen Verkleidungen abgedeckt sein und sich bei einer Inanspruchnahme, d. h. beim Aufblasen des Luftsackes aus diesen Verkleidungen herausschälen. Insbesondere bei einer derartigen Anordnung muß jedoch die Einbaulänge der Spannbänder im nicht aufgeblasenen Ruhezustand des Systemes erheblich länger sein als die eigentliche Funktionslänge im aufgeblasenen Zustand. Die Spannbänder müssen somit während des Aufblasevorganges des Luftsackes gespannt oder gekürzt werden, wobei dieser Vorgang zwangsläufig und ohne zusätzlich angeordnete Elemente erfolgen soll. In der Erkenntnis, daß sich ein flaches Band, wenn es tordiert wird, verkürzt, wird nun für den vorliegenden Anwendungsfall vorgeschlagen, die als Flachbänder ausgebildeten Spannbänder mit dem Luftsack zu vernähen und diesen in seiner nicht aufgeblasenen Ruhelage um die Spannbandmittelachse gerollt anzuordnen. Der Luftsack wird somit nicht ausschließlich gefaltet - wie bisher üblich -, sondern um die Spannbandachse aufgewickelt. Beim Aufblasen des Luftsackes rollt sich dieser dann um die Spannbandachse aus bzw. entwickelt sich, wobei gleichzeitig die Spannbänder tordiert und damit wie gewünscht verkürzt werden, um den Luftsack dann im aufgeblasenen Zustand im wesentlichen vollflächig verspannen zu können.

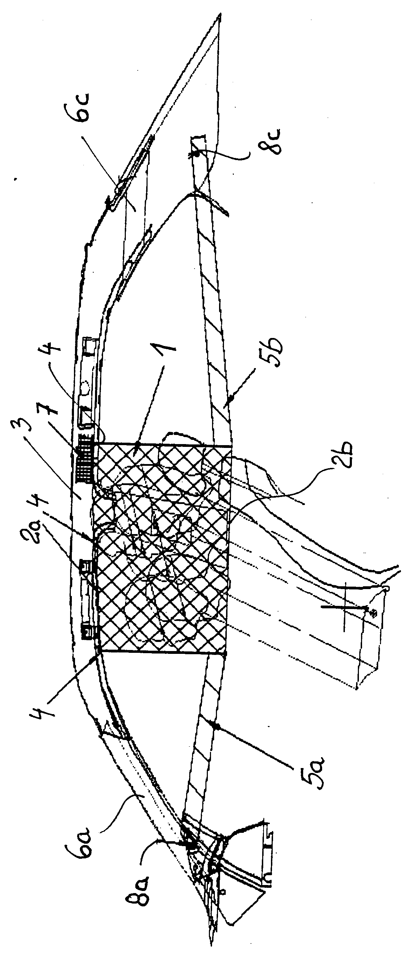

Dies sowie weitere Merkmale und Vorteile der Erfindung geht auch aus der folgenden Beschreibung eines bevorzugten Ausführungsbeispieles hervor, wobei die einzige Figurendarstellung die Seitenansicht auf ein erfindungsgemäßes Kopfschutzsystem in einer Prinzipdarstellung zeigt.

Mit der Bezugsziffer 1 ist ein im aufgeblasenen Zustand dargestellter Luftsack bezeichnet, der im Seitenbereich eines Kraftfahrzeuges bzw. im Innenraum eines Personenkraftwagens im Bereich des Seitenfensters vorgesehen ist. Dieser Luftsack 1 besitzt im aufgeblasenen Zustand wie ersichtlich im wesentlichen die Form eines Rechteckes, wobei die Längsseite 2a dieses rechteckigen Luftsackes 1 an der Fahrzeug-Karosse, und zwar am Dachholm 3 befestigt ist. Hier können zumindest zwei, aber auch mehrere Befestigungspunkte 4 vorgesehen sein.

An der der Längsseite 2a gegenüberliegenden Längsseite 2b des Luftsackes 1 ist jeweils im Endbereich dieser Längsseite 2b oder im Eckbereich dieses Luftsackes 1 ein Spannband 5a bzw. 5b befestigt, das seinerseits mit seinem dem Luftsack 1 abgewandten Ende an der Fahrzeug-Karosse befestigt ist. Das Spannband 5a ist somit am linken unteren Eck des Luftsackes 1 sowie an der A-Säule 6a des Kraftfahrzeuges im Punkt 8a befestigt, während das Spannband 5b am rechten unteren Eck des Luftsackes 1 und an der C-Säule 6c des Personenkraftwagens im Punkt 8c befestigt ist. Die beiden Spannbänder 5a, 5b sind dabei in ihrer Länge derart ausgelegt, daß der Luftsack 1 im aufgeblasenen Zustand - wie gezeigt - im wesentlichen vollflächig verspannt ist und somit Querkräfte durch das Aufprallen des Kopfes eines Fahrzeuginsassen - diese Querkräfte wirken dann senkrecht zur Zeichenebene - aufnehmen kann.

Im nicht aufgeblasenen Zustand soll der Luftsack 1 im Bereich des Dachholmes 3 von einer Innenraumverkleidung verdeckt angeordnet sein. Es ist klar ersichtlich, daß dann die Spannbänder 5a, 5b eigentlich länger sein müßten als im dargestellten aufgeblasenen Zustand. Da es aber nicht möglich ist, die Befestigungspunkte 8a, 8c der Spannbänder 5a, 5b an der Fahrzeugkarosse sowie am Luftsack 1 beim Aufblasen desselben zu verändern, sind somit Maßnahmen erforderlich, mit Hilfe derer sich die Spannbänder beim Aufblasen des Luftsackes 1 verkürzen. Grundsätzlich wäre es denkbar, ein entsprechend elastisches, gummiseilartiges Spannband 5a, 5b vorzusehen, jedoch könnte die erforderliche Dehnung des Spannbandes 5a, 5b im nicht aufgeblasenen Luftsack-Zustand diesen Luftsack 1 zerstören. Daher ist vorgesehen, den Luftsack 1 mit seinen Spannbändern 5a, 5b im nicht aufgeblasenen Zustand derart aufgewickelt im Bereich des Dachholmes 3 anzuordnen, daß beim Aufblasen dieses Luftsackes 1 durch Entwickeln die als Flachbänder ausgebildeten Spannbänder 5a, 5b tordiert und damit verkürzt werden. Diese Tatsache der Torsion der Spannbänder 5a, 5b ergibt sich auch aus der zeichnerischen Darstellung. Der Luftsack 1 wird somit im nicht aufgeblasenen Zustand nicht - wie bisher üblich - ausschließlich gefaltet, sondern in seine Ruhelage längs des Dachholmes 3 um die Spannbandmittelachse gerollt und kann dann anschließend entsprechend gerollt in einer Verpackungseinheit untergebracht sein. Beim Einbau dieses so vorbereiteten Systemes ins Kraftfahrzeug wird diese Verpackungseinheit im Bereich des Dachholmes 3 fixiert und die seitlich aus dieser Verpackungseinheit herausschauenden Spannbänder im nicht- bzw. gegenläufig tordierten Zustand an der A-Säule 6a im Punkt 8a sowie im Punkt 8c an der C-Säule 6c des Fahrzeuges befestigt. Wird das aufblasbare Kopfschutzsystem später benötigt und der Luftsack 1 somit aufgeblasen, so rollt sich dieser um die Spannbandachse aus, wobei die flachen Spannbänder 5a, 5b tordiert und damit verkürzt werden, so daß sich dieses System entsprechend der Figurendarstellung im Fahrzeug-Innenraum aufspannt.

Bei der Auslegung dieses aufblasbaren Kopfschutzsystemes ist darauf zu achten, daß die Abmessungen des Luftsackes 1 sowie die Länge der Spannbänder 5a, 5b sowie die Anzahl der Umdrehungen beim Einrollen des Luftsackes 1 aufeinander abgestimmt sind. Einerseits müssen nämlich die Spannbänder 5a, 5b, wie bereits ausführlich erläutert, ausreichend lang sein, um den zusammengerollten Luftsack 1 im Ruhezustand längs des Dachholmes 3 unterbringen zu können, andererseits müssen die Spannbänder 5a, 5b im dargestellten aufgeblasenen Luftsack-Zustand so kurz sein, daß dieser Luftsack 1 durch die Befestigungspunkte 4 einerseits und durch die beiden Spannbänder 5a, 5b andererseits im wesentlichen vollflächig verspannt ist und somit Querkräfte, die senkrecht zur Zeichenebene ausgerichtet sind, aufnehmen kann.

Ein besonderer Vorteil des erfindungsgemäßen aufblasbaren Kopfschutzsystemes besteht darin, daß der Schutzbereich des Luftsackes 1, d. h. diejenige Fläche, die vom Luftsack 1 im aufgeblasenen Zustand abgedeckt wird, konstruktiv wie gewünscht eingestellt bzw. variiert werden kann. Damit ergibt sich für die Fahrzeuginsassen auch ein erhöhter Schutz vor Glassplittern der unter Umständen geborstenen Seitenscheiben. Unter Einsetzung bekannter Herstellverfahren können dabei auch unterschiedliche Luftsack-Querschnitte durch zusätzliche Abnäher realisiert werden. Mit der Bezugsziffer 7 ist weiterhin ein Gasgenerator bezeichnet, der ebenfalls im Bereich des Dachholmes 3 angeordnet sein kann und dem Aufblasen des Luftsackes 1 dient, jedoch kann dies sowie weitere Details insbesondere konstruktiver Art durchaus abweichend vom gezeigten Ausführungsbeispiel gestaltet sein, ohne den Inhalt der Patentansprüche zu verlassen.

## Patentansprüche

1. Aufblasbares Kopfschutzsystem insbesondere für den Seitenbereich eines Kraftfahrzeuges, mit einem an der Fahrzeug-Karosse an zumindest zwei Befestigungspunkten (4) angebundenen, im nicht aufgeblasenen Zustand verdeckt angeordneten Luftsack (1),
dadurch gekennzeichnet, daß am Luftsack (1) abseits der Befestigungspunkte (4) zumindest zwei Spannbänder (5a, 5b) vorgesehen sind, die derart an der Karosse befestigt sind, daß der Luftsack (1) im aufgeblasenen Zustand im wesentlichen vollflächig verspannt ist.

2. Kopfschutzsystem nach Anspruch 1,
dadurch gekennzeichnet, daß der Luftsack (1) im aufgeblasenen Zustand im wesentlichen die Form eines Rechteckes hat, dessen eine Längsseite (2a) an der Karosse befestigt ist und an dessen gegenüberliegender Längsseite (2b) jeweils im Eckbereich die Spannbänder (5a, 5b) befestigt sind.

3. Kopfschutzsystem nach Anspruch 1 oder 2,
dadurch gekennzeichnet, daß der Luftsack (1) im nicht aufgeblasenen Zustand im Bereich eines Fahrzeug-Dachholmes (3) angeordnet ist und die Spannbänder (5a, 5b) mit ihren dem Luftsack (1) abgewandten Enden an der A-Säule (6a) und der C-Säule (6c) der Karosse befestigt sind.

4. Kopfschutzsystem nach einem der vorangegangenen Ansprüche,
dadurch gekennzeichnet, daß der Luftsack (1) mit seinen als Flachbänder ausgebildeten Spannbändern (5a, 5b) im nicht aufgeblasenen Zustand derart aufgewickelt angeordnet ist, daß beim Aufblasen des Luftsackes (1) durch Entwickeln die Spannbänder (5a, 5b) tordiert und damit verkürzt werden.

## Claims

1. An inflatable head protection system, especially for the side region of a motor vehicle, with an air bag (1) which is arranged concealed in an uninflated state and is connected to the vehicle body at not less than two securing points (4),
characterised in that at least two tensioning straps (5a, 5b) are provided on the air bag (1) behind the securing points (4), and are secured to the vehicle body in such a way that the air bag (1), in an inflated state, is substantially tensioned over its entire surface.

2. A head protection system according to claim 1,
characterised in that in its inflated state the air bag (1) has a substantially rectangular shape, with its one longitudinal side (2a) secured to the vehicle body and with its opposite longitudinal side (2b) secured in the corner regions to the tensioning straps (5a, 5b).

3. A head protection system according to claim 1 or claim 2,
characterised in that in its uninflated state the air bag (1) can be arranged in the region of a vehicle roof rail (3) and the tensioning straps (5a, 5b) are secured through their ends facing away from the air bag (1) to the A pillar (6a) and the C pillar (6c) of the vehicle body.

4. A head protection system according to any one of the preceding claims,
characterised in that in an uninflated state the air bag (1) with its tensioning straps (5a, 5b) in the form of flat straps is arranged rolled-up in such a manner that upon inflation of the air bag (1) through expansion the tensioning straps (5a, 5b) are twisted and therefore shortened.

## Revendications

1. Système gonflable protégeant la tête, en particulier pour la zone latérale d'un véhicule automobile, avec un sac à air (1) lié à la carrosserie du véhicule en au moins deux points de fixation (4), disposé de façon couverte lorsqu'il est à l'état non gonflé,
caractérisé en ce que
sur le sac à air (1), à l'écart des points de fixation (4) sont prévues au moins deux bandes tendeuses (5a, 5b), qui sont fixées sur la carrosserie de manière que, à l'état gonflé, le sac à air (1) soit tendu sensiblement sur toute la surface.

2. Système protégeant la tête selon la revendication 1,
caractérisé en ce que
à l'état gonflé, le sac à air (1) a sensiblement la forme d'un rectangle dont un côté long (2a) est fixé sur la carrosserie et sur le côté long (2b) opposé duquel les bandes tendeuses (5a, 5b) sont respectivement fixées dans la zone d'angle.

3. Système protégeant la tête selon la revendication 1 ou 2,
caractérisé en ce que
à l'état non gonflé, le sac à air (1) est disposé dans la zone d'un montant de toit (3) du véhicule et les bandes tendeuses (5a, 5b) sont fixées, par leurs extrémités opposées au sac à air (1), sur la colonne A (6a) et la colonne C (6c) de la carrosserie.

4. Système protégeant la tête selon l'une des revendications précédentes,
caractérisé en ce que
le sac à air (1) est disposé, avec ses bandes tendeuses (5a, 5b) réalisées sous la forme de bandes plates, à l'état non gonflé, enroulées de manière que, lors du gonflage du sac à air (1), suite au déroulement, il se produise une torsion et ainsi un raccourcissement des bandes tendeuses (5a, 5b).
